# EUROPÄISCHE PATENTSCHRIFT

(11) **EP 3 016 777 B1**
(45) Veröffentlichungstag und Bekanntmachung des Hinweises auf die Patenterteilung: **06.09.2017**
(21) Anmeldenummer: 14734084.8
(22) Anmeldetag: 24.06.2014
(51) Int. Cl.: B23Q 11/10

(54) **WERKZEUGAUFNAHME**
TOOL RECEPTACLE
LOGEMENT D'OUTIL

(30) Priorität: 01.07.2013 DE 102013106883; 02.04.2014 DE 102014104623
(43) Veröffentlichungstag der Anmeldung: 11.05.2016
(73) Patentinhaber: Franz Haimer Maschinenbau KG, 86568 Hollenbach-Igenhausen (DE)
(72) Erfinder: HAIMER, Franz, 86568 Igenhausen (DE)
(74) Vertreter: Charrier Rapp & Liebau
(86) Internationale Anmeldenummer: PCT/EP2014/063220
(87) Internationale Veröffentlichungsnummer: WO 2015/000736

(56) Entgegenhaltungen:
- EP-A1- 0 579 371
- WO-A1-95/29030
- DE-A1-102005 013 483

## Beschreibung

Die Erfindung betrifft eine Werkzeugaufnahme nach dem Oberbegriff des Anspruchs 1. Die Erfindung betrifft außerdem ein Werkzeug für eine derartige Werkzeugaufnahme.

Moderne Werkzeugaufnahmen weisen in der Regel die Möglichkeit einer inneren Kühlmittelzufuhr auf Sie enthalten üblicherweise einen zentralen Kühlmittelkanal, durch den ein von einer Arbeitspindel einer Werkzeugmaschine über ein Kühlmittelrohr eingeleiteter Kühlschmierstoff zu einer Aufnahmeöffnung für das Werkzeug geführt werden kann.

Aus der DE 10 2005 013 483 A1 ist eine gattungsgemäße Werkzeugaufnahme bekannt, bei der in einem Aufnahmekörper eine Fluidzuführung für die Zufuhr eines Kühl- und/oder Schmierfluids zu einem in eine Aufnahmeöffnung des Werkzeugkörpers eingesetzten Werkzeug vorgesehen ist. Die Fluidzuführung wird bei dieser bekannten Werkzeugaufnahme durch einen Durchgang in einem im Aufnahmekörper angeordneten rohrförmigen Übergabeelement, durch einen Durchgang in einer im Aufnahmekörper angeordneten Anschlaghülse und durch ein Verbindungsrohr zwischen dem Übergabeelement und der Anschlaghülse gebildet. Diese Werkzeugaufnahme weist jedoch nur einen einzigen Durchgangskanal auf und ist für die ist Zuführung eines einzigen Kühlschmiermittels oder eines zuvor erzeugten Schmiermittelnebels konzipiert.

Aufgabe der Erfindung ist es, eine Werkzeugaufnahme und ein Werkzeug für eine derartige Werkzeugaufnahme zu schaffen, die eine erweiterte Zuführung von Arbeitsfluiden zu einem in der Werkzeugaufnahme angeordneten Werkzeug ermöglichen.

Diese Aufgabe wird durch eine Werkzeugaufnahme mit den Merkmalen des Anspruchs 1 und durch ein Werkzeug mit den Merkmalen des Anspruchs 16 gelöst. Zweckmäßige Weiterbildungen und vorteilhafte Ausgestaltungen der Erfindung sind in den Unteransprüchen angegeben.

Bei der erfindungsgemäßen Werkzeugaufnahme verlaufen durch den Aufnahmekörper zwei voneinander getrennte und nicht in Fluidverbindung miteinander stehende Fluidzuführungen bzw. Kanäle, über die unterschiedliche Fluide ohne Vermischung vor oder innerhalb der Werkzeugaufnahme voneinander getrennt zur Schneide eines Werkzeugs geleitet werden können. Durch eine erste Fluidzuführung kann so z.B. flüssiges CO₂ unter Druck durch die Werkzeugaufnahme hindurch zu einer oder mehreren durch das Werkzeug verlaufenden Kühlbohrungen geleitet werden, während über die zweite Fluidzuführung ein Ölnebel oder ein anderer konventioneller Kühlschmierstoff zu der Außenseite des Werkzeugschafts und an diesem entlang zu der Werkzeugschneide geführt wird. Dadurch kann das Einsatzgebiet der Werkzeugaufnahme erweitert werden. Die beiden Fluidzuführungen sind vollständig voneinander getrennt und weisen getrennte Ein- und Auslässe an der Werkzeugaufnahme auf. Es findet keine Vermischung der über die beiden Fluidzuführungen eingeleiteten Fluide innerhalb der Werkzeugaufnahme statt.

In einer zweckmäßigen Ausführung kann die erste Fluidzuführung durch ein Durchgangsloch in einem im Aufnahmekörper angeordneten Anschlagteil, ein weiteres Durchgangsloch in einem im Aufnahmekörper angeordneten Übergabeelement und ein im Aufnahmekörper angeordnetes Verbindungsrohr zur Verbindung der beiden Durchgangslöcher gebildet sein. Die zweite Fluidzuführung kann durch mindestens einen vom Durchgangsloch getrennten Durchgangskanal im Anschlagteil, mindestens einen vom weiteren Durchgangsloch getrennten weiteren Durchgangskanal im Übergabeelement und einem im Aufnahmekörper angeordneten Verbindungskanal zur Verbindung der Durchgangskanäle gebildet sein.

Bei der ersten Fluidzuführung kann eine abgedichtete Verbindung zwischen dem Übergabeelement und dem Anschlagteil dadurch erreicht werden, dass das Verbindungsrohr mit seinen Enden radial abgedichtet in dem Durchgangsloch des Anschlagteils und in dem weiteren Durchgangsloch des Übergabeelements angeordnet ist. Das Verbindungsrohr kann in dem Übergabeelement fest und in dem Anschlagteil axial verschiebbar angeordnet sein. Dadurch kann die dichte Verbindung auch bei einer zur Längeneinstellung des Werkzeugs ggf. erforderlichen Axialverstellung des Anschlagteils innerhalb des Aufnahmekörpers gewährleistet werden. Selbstverständlich kann das Verbindungsrohr aber auch fest im Anschlagteil und axial verschiebbar in dem Übergabeelement angeordnet sein.

Bei der zweiten Fluidzuführung kann eine abgedichtete Verbindung zwischen dem Übergabeelement und dem Anschlagteil durch eine Dichthülse erfolgen, die innerhalb einer Durchgangsbohrung des Aufnahmekörpers konzentrisch zum Verbindungsrohr zwischen dem Übergabeelement und dem Anschlagteil angeordnet ist. Wird z.B. bei einer Minimalmengenschmierung ein Ölnebel durch die zweite Fluidzuführung geleitet, kann durch eine abdichtende Anlage der Dichthülse an dem Übergabeelement und dem Anschlagteil verhindert werden, dass sich in diesem Bereich das Öl von dem Luftstrom trennt und sich in nicht durchströmten Versackungsbereichen sammelt. Zwischen der Innenwand der Dichthülse und der Außenwand des Verbindungsrohrs wird ein im Querschnitt ringförmiger Verbindungskanal zur Verbindung Durchgangskanäle im Übergabeelement mit den Durchgangskanälen im Anlageteil begrenzt. In einer zweckmäßigen Ausführung kann die Dichthülse derart ausgebildet sein, dass sie das Anschlagteil überlappt. Dadurch kann die Abdichtung der zweiten Fluidzuführung auch bei einer Axialverstellung des Anschlagteils gewährleistet werden. Die Dichthülse kann aber auch in Längsrichtung flexibel und unter Vorspannung zwischen das Übergabeelement und das Anschlagteil eingebaut sein, so dass eine abdichtende Anlage auch bei einer Axialverstellung des Anschlagteils beibehalten wird.

Für die Zuführung eines Fluids entlang der Außenseite eines Werkzeugschafts kann die zweite Fluidzuführung in Fluidkanäle münden, die in einem vorderen Spannbereich des Aufnahmekörpers angeordnet sind. Diese Fluidkanäle können z.B. durch Quer- und Längsbohrungen oder durch Längsschlitze an der Innenseite der Aufnahmeöffnung gebildet sein. Die zweite Fluidzuführung kann auch in einen zwischen dem inneren Ende des Werkzeugschafts und der Aufnahmeöffnung gebildeten Verteilerraum münden, von dem das Fluid z.B. über Querbohrungen im Werkzeugschaft zu weiteren dezentralen Bohrungen im Werkzeug geleitet werden kann.

Um eine dichte Verbindung zwischen dem Anschlagteil und dem Werkzeugschaft zu ermöglichen, kann an dem zum Werkzeugschaft weisenden Ende des Anschlagteils ein Dichtelement zur Abdichtung gegenüber dem Werkzeugschaft angeordnet sein. Die Dichtelemente können unterschiedliche Formen zur optimalen Anpassung an die jeweiligen Werkzeuge aufweisen. Zusätzlich oder anstelle des Dichtelements kann an dem zum Werkzeugschaft weisenden Ende des Anschlagteils auch ein Verteilerelement zur Verteilung der über die erste und zweite Fluidzuführung zugeführten Fluide vorgesehen sein. Neben einer Verteilung der Fluide kann das Verteilerelement auch eine Abdichtfunktion übernehmen. Das Verteilerelement ist zweckmäßigerweise lösbar mit dem Anschlagteil verbunden, so dass die Werkzeugaufnahme durch Austausch unterschiedlicher Verteilerelemente relativ einfach und kostengünstig an unterschiedliche Werkzeuge und Bearbeitungsanforderungen angepasst werden kann. Das Verteilerelement könnte aber auch einteilig mit dem Anschlagteil ausgeführt sein.

In vorteilhafter Weise weist das Verteilerelement ein vorderes Anlageteil und ein hinteres Federteil auf. Über das Federteil ist das Verteilerelement in Axialrichtung flexibel und es kann eine zusätzliche Dämpfung erreicht werden.

Um eine Verteilung des über die erste Fluidzuführung eingeleiteten Fluids auf mehrere z.B. wendelförmig durch den Werkzeugschaft verlaufende Kühlbohrungen zu erreichen, kann das Verteilerelement eine zentrale Durchgangsöffnung und eine Vertiefung in einer vorderen Anlagefläche aufweisen. Das Verteilerelement kann aber auch eine zentrale Durchgangsöffnung und mit den Durchgangskanälen des Anschlagteils verbundene Durchgänge enthalten. Durch die zentrale Durchgangsöffnung kann ein über die erste Fluidzuführung eingeleitetes Fluid zu einer zentralen Kühlbohrung geleitet werden, während durch die weiteren Durchgänge ein über die zweite Fluidzuführung eingeleitetes Fluid zu weiteren Kühlbohrungen in dem Werkzeug geleitet werden kann. In einer weiteren Ausführung können in dem Verteilerelement von innen nach außen geführte erste Durchtrittskanäle und von außen innen geführte zweite Durchtrittskanäle vorgesehen sein. Dadurch wird eine Fluidverteilung über Kreuz ermöglicht, so dass z.B. ein durch die Durchlässe der zweiten Fluidzuführung eingeleitetes Fluid zu einer zentralen Kühlbohrung im Werkzeug geleitet werden kann, während ein durch die zentrale erste Fluidzuführung eingeleitetes Fluid radial nach außen zu den um die zentrale Kühlbohrung im Werkzeug verlaufenden Kühlbohrungen geleitet wird. Auch andere Ausgestaltungen des Verteilerelements sind möglich, so dass die Werkzeugaufnahme ohne große Umbaumaßnahmen relativ einfach und schnell an die jeweiligen Bearbeitungsanforderungen angepasst werden kann.

Die Werkzeugaufnahme ist vorzugsweise als Schrumpffutter mit einem durch Erwärmung aufweitbaren vorderen Spannbereich ausgeführt. Sie könnte aber auch als Spannzangenfutter mit einer Spannzange und einer Spannmutter, als Dehnspannfutter, als Rollenkraftspannfutter oder dgl. ausgebildet sein.

Ein Werkzeug für die vorstehend beschriebene Werkzeugaufnahme weist in dem Werkzeugschaft zumindest eine an dessen Mantelfläche angeordnete Einlassöffnung für mindestens einen Fluidkanal auf. In dem Werkzeugschaft ist ausserdem zumindest eine an dessen hintere Stirnfläche angeordnete Einlassöffnung für einen weiteren Fluidkanal vorgesehen. Weitere Besonderheiten und Vorzüge der Erfindung ergeben sich aus der folgenden Beschreibung bevorzugter Ausführungsbeispiele anhand der Zeichnung. Es zeigen:
- **Figur 1**: ein erstes Ausführungsbeispiel einer Werkzeugaufnahme in einem Längsschnitt;
- **Figur 2**: eine vergrößerte Detailansicht des Bereichs A von Figur 1;
- **Figur 3**: ein zweites Ausführungsbeispiel einer Werkzeugaufnahme in einem Längsschnitt;
- **Figur 4**: eine vergrößerte Detailansicht des Bereichs A von Figur 3;
- **Figur 5**: ein drittes Ausführungsbeispiel einer Werkzeugaufnahme in einem Längsschnitt;
- **Figur 6**: eine vergrößerte Detailansicht des Bereichs A von Figur 5;
- **Figur 7**: ein viertes Ausführungsbeispiel einer Werkzeugaufnahme in einem Längsschnitt;
- **Figur 8**: eine vergrößerte Detailansicht des Bereichs A von Figur 7;
- **Figur 9**: ein fünftes Ausführungsbeispiel einer Werkzeugaufnahme in einem Längsschnitt;
- **Figur 10**: eine vergrößerte Detailansicht des Bereichs A von Figur 9;
- **Figur 11**: ein sechstes Ausführungsbeispiel einer Werkzeugaufnahme in einem Längsschnitt;
- **Figur 12**: eine vergrößerte Detailansicht des Bereichs A von Figur 11;
- **Figur 13**: ein siebtes Ausführungsbeispiel einer Werkzeugaufnahme in einem Längsschnitt;
- **Figur 14**: eine vergrößerte Detailansicht des Bereichs A von Figur 13;
- **Figur 15**: ein achtes Ausführungsbeispiel einer Werkzeugaufnahme in einem Längsschnitt und
- **Figur 16**: eine vergrößerte Detailansicht des Bereichs A von Figur 15;
- **Figur 17**: eine vergrößerte Detailansicht eines neunten Ausführungsbeispiels und
- **Figur 18**: eine vergrößerte Detailansicht eines zehnten Ausführungsbeispiels.

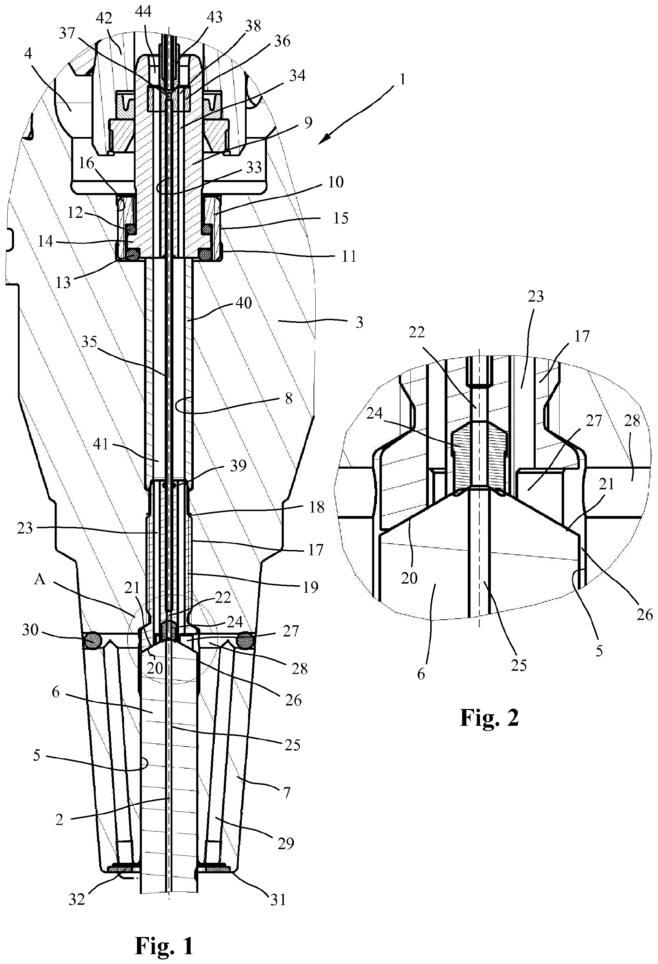

Figur 1 zeigt ein erstes Ausführungsbeispiel einer z.B. als HSK-Werkzeugaufnahme ausgeführten Werkzeugaufnahme 1 mit einem um eine Mittelachse 2 drehbaren rotationssymmetrischen Aufnahmekörper 3, der an einem maschinenseitigen Ende einen Hohlraum 4 für den Eingriff von Spannelementen und an einem werkzeugseitigen Ende eine Aufnahmeöffnung 5 für einen Werkzeugschaft 6 eines z.B. als Bohrer, Fräser oder dgl. ausgebildeten Werkzeugs enthält. Die Werkzeugaufnahme 1 ist bei der gezeigten Ausführung als Schrumpffutter ausgebildet und enthält einen vorderen Spannbereich 7, in dem die zur Mittelachse 2 zentrische Aufnahmeöffnung 5 für den Werkzeugschaft 6 des Werkzeugs 2 angeordnet ist. Bei einer derartigen Werkzeugaufnahme 1 wird der vordere Spannbereich 7 des Aufnahmekörpers 3 z.B. durch induktive Erwärmung erhitzt, wodurch sich der Innendurchmesser der Aufnahmeöffnung 5 vergrößert. Im erwärmten Zustand des vorderen Spannbereichs 7 wird der Werkzeugschaft 6 des Werkzeugs in die Aufnahmeöffnung 5 eingesetzt, wobei das Verhältnis des Innendurchmessers der Aufnahmeöffnung 5 zum Außendurchmesser des Werkzeugschafts 6 derart ausgelegt ist, dass das Werkzeug beim anschließenden Abkühlen des Spannbereichs 7 fest in der Werkzeugaufnahme 1 gehalten wird.

Der Aufnahmekörper 3 enthält eine zentrale Durchgangsöffnung 8, die von dem erweiterten Hohlraum 4 am maschinenseitigen Ende des Aufnahmekörpers 3 zentral durch den Aufnahmekörper 3 hindurch bis zur Aufnahmeöffnung 5 für den Werkzeugschaft 6 verläuft. An dem Übergang von dem Hohlraum 4 zu der Durchgangsöffnung 8 ist in dem Aufnahmekörper 3 ein rohrförmiges Übergabeelement 9 angeordnet. Das rohrförmige Übergabeelement 9 ist über eine Gewindehülse 10 in einer stufenförmigen Erweiterung 11 am Übergang von dem Hohlraum 4 zur Durchgangsöffnung 8 durch Dichtungen 12 und 13 radial abgedichtet fixiert. Hierzu weist das rohrförmige Übergabeelement 9 einen Ringbund 14 auf und die Gewindehülse 10 ist in Art einer Überwurfmutter mit einem Außengewinde 15 in ein entsprechendes Innengewinde 16 der stufenförmigen Erweiterung 11 eingeschraubt.

An dem Übergang von der Durchgangsöffnung 8 zu der Aufnahmeöffnung 5 für den Werkzeugschaft 6 ist innerhalb des Aufnahmekörpers 3 ein hülsenförmiges Anschlagteil 17 axial verstellbar angeordnet. Hierzu ist das hülsenförmige Anschlagteil 17 über ein Außengewinde 18 in ein entsprechendes Innengewinde 19 an dem in die Aufnahmeöffnung 5 mündenden Ende der zentralen Durchgangsöffnung 8 eingeschraubt. Das hülsenförmige Anschlagteil 17 weist an seinem dem Werkzeugschaft 6 zugewandten Ende eine Anschlagfläche 20 zur Anlage einer hinteren Stirnfläche 21 des Werkzeugschafts 6 auf. Das hülsenförmige Anschlagteil 17 enthält ferner ein zentrales Durchgangsloch 22 und mehrere von diesem getrennte Durchgangskanäle 23, die gegenüber dem Durchgangloch 22 radial nach außen versetzt und in Umfangsrichtung gleichwinklig beabstandet in Längsrichtung durch das Anschlagteil 17 verlaufen. Die um das zentrale Durchgangsloch 22 angeordneten Durchgangskanäle 23 können z.B. einen ringsegmentförmigen Querschnitt aufweisen. An dem zum Werkzeugschaft 3 gewandten Ende des Anschlagteils ist ein mit einem Durchgang versehenes Dichtelement 24 zur abgedichteten Verbindung zwischen dem zentralen Durchgangsloch 22 und einer durch den Werkzeugschaft 6 verlaufenden zentralen Kühlbohrung 25 angeordnet. Das Dichtelement 24 kann aus einem elastischen Kunststoff, aus Metall oder aus einem anderen geeigneten Werkstoff bestehen.

Wie besonders aus Figur 2 hervorgeht, ist die im vorderen Spannbereich 7 des Aufnahmekörpers 3 angeordnete Aufnahmeöffnung 5 an dem inneren Ende radial erweitert, so dass zwischen dem inneren Ende des Werkzeugschafts 6 und der Aufnahmeöffnung 5 ein Verteilerraum 26 für einen über die Durchgangskanäle 23 zugeführten Kühlschmierstoff gebildet wird. Zur Verbindung der Durchgangskanäle 23 mit dem Verteilerraum 26 sind an dem zum Werkzeugschaft 6 weisenden Ende des hülsenförmigen Anschlagteils 17 in die Durchgangskanäle 23 mündende radiale Aussparungen 27 vorgesehen. In dem vorderen Spannbereich 7 des Aufnahmekörpers 3 befinden sich mehrere in Umfangsrichtung verteilte weitere Kühlmittelkanäle, die bei der gezeigten Ausführung durch Querbohrungen 28 und mehrere in Umfangsrichtung gleichwinklig beabstandete Längsbohrungen 29 in dem Aufnahmekörper 3 gebildet sind. Die Querbohrungen 28 verlaufen von der Außenseite des Aufnahmekörpers 3 bis zum Verteilerraum 26 und sind an der Außenseite durch eine Kugel 30 oder einen Stopfen verschlossen.

Die Längsbohrungen 29 verlaufen gemäß Figur 1 von einer vorderen Stirnseite 31 des Aufnahmekörpers 3 entlang der Aufnahmeöffnung 5 und münden in die Querbohrungen 28. Über die durch die Querbohrungen 28 und Längsbohrungen 29 gebildeten weiteren Kühlmittelkanäle kann ein durch Durchgangskanäle 23 des Anschlagteils 17 in den Verteilerraum 26 eingeleitetes Fluid an der Außenseite des Werkzeugschafts 6 entlang zur Schneide des Werkzeugs geleitet werden. In einer entsprechenden Vertiefung an der vorderen Stirnseite 31 des Aufnahmekörpers 3 kann eine Verteilerscheibe 32 mit Verteilerbohrungen oder Verteilerschlitzen zur gerichteten Verteilung des durch die Längsbohrungen 29 zu der vorderen Stirnseite 31 geleiteten Fluids angeordnet sein.

In Figur 1 ist ersichtlich, dass auch das rohrförmige Übergabeelement 9 ein zentrales weiteres Durchgangsloch 33 und mehrere von diesem getrennte weitere Durchgangskanäle 34 enthält, die gegenüber dem Durchgangloch 33 radial nach außen versetzt und in Umfangsrichtung gleichwinklig beabstandet in Längsrichtung durch das Übergabeelement 9 verlaufen. Auch hier können die um das zentrale Durchgangsloch 33 angeordneten Durchgangskanäle 34 einen ringsegmentförmigen Querschnitt aufweisen. Die Verbindung zwischen dem Durchgangsloch 22 in Anschlagteil 17 und dem weiteren Durchgangsloch 33 im Übergabeelement 9 erfolgt durch ein Verbindungsrohr 35, das sich durch die Durchgangsöffnung 8 erstreckt und mit seinen Enden in dem Durchgangsloch 22 des Anschlagteils 17 und dem weiteren Durchgangsloch 33 des Übergabeelements 9 sitzt.

Beim gezeigten Ausführungsbeispiel ist das im Durchgangsloch 33 des Übergabeelements 9 sitzende Ende des Verbindungsrohrs 35 axial gesichert im Übergabeelement 9 angeordnet, während das in das Durchgangsloch 22 des Anschlagteils 17 ragende Ende des Verbindungsrohrs 35 gegenüber dem Anschlagteil 17 axial verschiebbar und durch eine Dichtung 39 abgedichtet im Durchgangsloch 22 sitzt. Dadurch kann das Anschlagteil 17 zur Einstellung axial bewegt werden. Selbstverständlich kann das Verbindungsrohr 35 aber auch in dem Anschlagteil 17 axial gesichert und in dem Übergabeelement 9 verschiebbar sein. Das in dem Übergabeelement 9 angeordnete Ende des Verbindungsrohrs 35 sitzt in einem Dichtstück 36, das in einer Vertiefung des Übergabeelements 9 befestigt ist und neben einem zentralen Durchgang 37 mit den Durchgangskanälen 33 im Übergabeelement 8 fluchtende Durchlässe 38 aufweist.

In der Durchgangsöffnung 8 des Aufnahmekörpers 3 ist zwischen dem Übergabeelement 9 und dem Anschlagteil 17 eine Dichthülse 40 angeordnet. Die Dichthülse 40 ist in Längsrichtung elastisch, so dass sie auch bei einer axialen Verstellung des Anschlagteils 17 mit ihren beiden Enden abdichtend in Kontakt mit dem Übergabeelement 9 und dem Anschlagteil 17 bleibt. Zwischen der Innenwand der Dichthülse 40 und der Außenwand des Verbindungsrohrs 35 wird ein im Querschnitt ringförmiger Verbindungskanal 41 begrenzt, über den ein durch die Durchgangskanäle 23 des Übergabeelements 9 eingeleitetes Fluid zu den Durchgangskanälen 23 des Anschlagteils 17 und von dort über die Quer- und Längsbohrungen 27 bzw. 28 zu der Außenseite des Werkzeugs geleitet werden kann.

Die Übergabe der Fluide von einer Maschinenspindel auf das Übergabeelement 9 erfolgt durch ein Kupplungsteil 42 mit einer zentralen Übergabelanze 43, die auf das Dichtstück 36 drückt. Zwischen der zentralen Übergabelanze 43 und dem auf das Übergabeelement 9 aufsteckbaren Kupplungsteil 42 ist ein Ringraum 44 vorgesehen. Durch die zentrale Übergabelanze 43 kann ein Fluid über das Übergabeelement 9, das Verbindungsrohr 35 und das Anschlagteil 17 zu der zentralen Kühlbohrung 25 im Werkzeug geleitet werden. Durch den Ringraum 44 kann ein weiteres Fluid über die Durchgangskanäle 34 des Übergabeelements 9, den Verbindungskanal 41 und die Durchgangskanäle 23 im Anschlagteil 17 zu den hier durch die Querbohrungen 28 und Längsbohrungen 29 gebildeten Fluidkanälen in dem Spannbereich 7 des Aufnahmekörpers 3 geleitet werden.

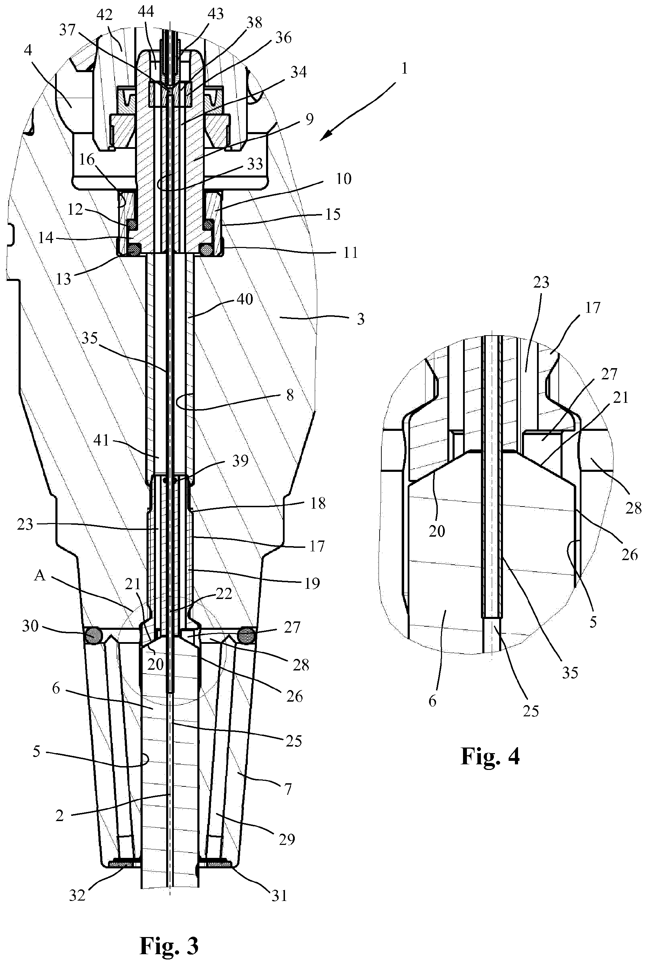

In den Figuren 3 bis 16 sind weitere Ausführungsbeispiele einer Werkzeugaufnahme 1 mit einer 2-Kanal-Fluidzuführung gezeigt. Der Grundaufbau und die Funktionsweise dieser Ausführungen entspricht im Wesentlichen der zuvor ausführlich beschriebenen und in den Figuren 1 und 2 gezeigten Ausführung, so dass einander entsprechende Bauteile mit denselben Bezugszeichen versehen sind und auf deren Beschreibung Bezug genommen wird. Das in den Figuren 3 und 4 gezeigte weitere Ausführungsbeispiel entspricht im Wesentlichen der zuvor beschriebenen Ausführung, so dass zum Aufbau auf die dortige Beschreibung verwiesen wird. Im Unterschied zur Ausführung der Figuren 1 und 2 endet jedoch das zum Werkzeugschaft 6 weisende Ende des Verbindungsrohrs 35 nicht im Anschlagteil 17, sondern ragt durch dieses hindurch und greift in die zentrale Kühlbohrung 25 des Werkzeugs ein.

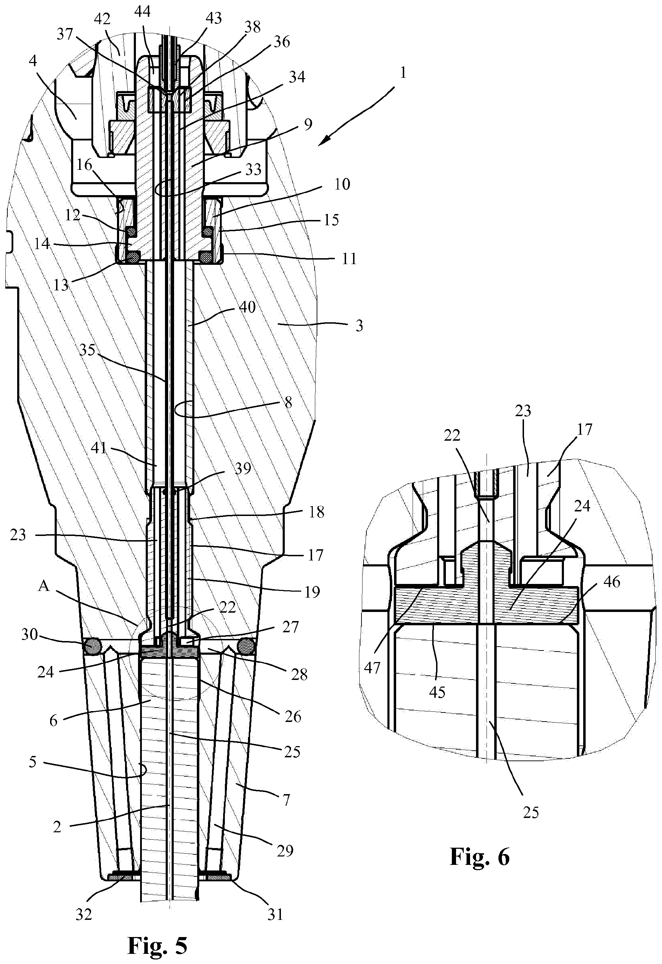

Auch das Ausführungsbeispiel der Figuren 5 und 6 entspricht im Wesentlichen der Ausführungsform der Figuren 1 und 2. Lediglich das Anschlagteil 17 und die Dichtung 24 sind anders ausgeführt. Wie aus Figur 6 hervorgeht, weist die an dem zum Werkzeugschaft 6 gewandten Ende des Anschlagteils 17 angeordnete Dichtung 24 eine plane Anlagefläche 45 zur Anlage an einer planen hinteren Stirnfläche 46 am Werkzeugschaft 6 eines Werkzeugs auf. Auch das Anschlagteil 17 hat eine plane vordere Stirnfläche 47, an der die mit einem Durchgang versehene Dichtung 24 zur Anlage gelangt. Durch eine derartige Ausführung kann eine abgedichtete Fluidzufuhr zu einer zentralen Kühlbohrung bei Werkzeugen gewährleistet werden, die am hinteren Ende des Werkzeugschafts keine konische, sondern plane hintere Stirnfläche aufweisen.

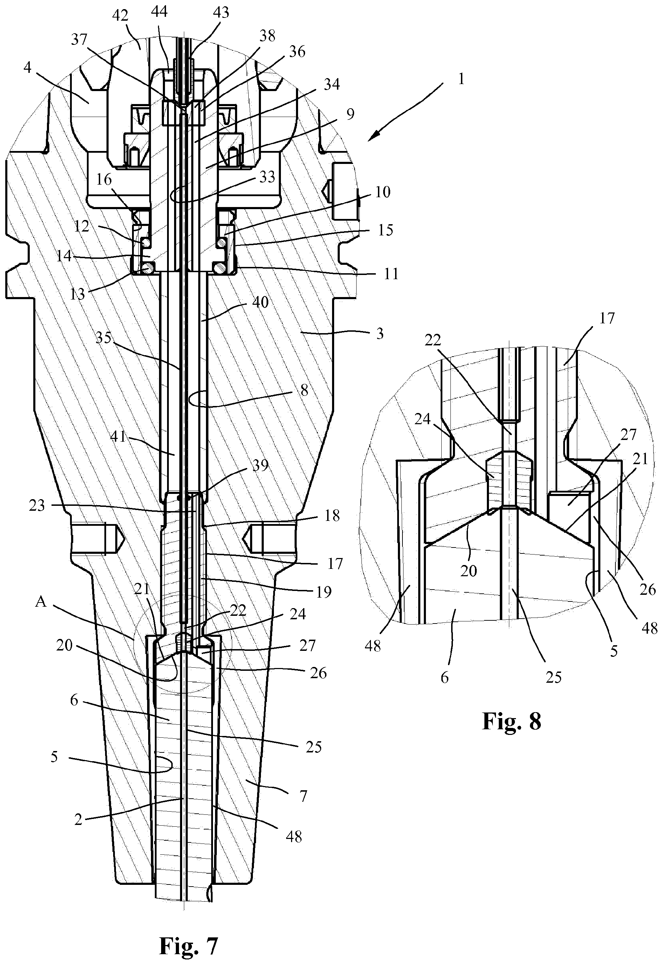

Bei dem in den Figuren 7 und 8 gezeigten Ausführungsbeispiel sind die in dem Spannbereich 7 des Aufnahmekörpers 3 angeordneten Fluidkanäle als Längschlitze 48 an der Innenseite der Aufnahmeöffnung 5 ausgeführt. Über diese Längsschlitze 48 kann das durch die Durchgangkanäle 34 im Übergabeteil und die Durchgangkanäle 23 im Anschlagteil 17 geleitete Fluid am Werkzeugschaft 6 des Werkzeugs entlang zur Stirnseite des Aufnahmekörpers 3 geleitet werden und kann dort austreten.

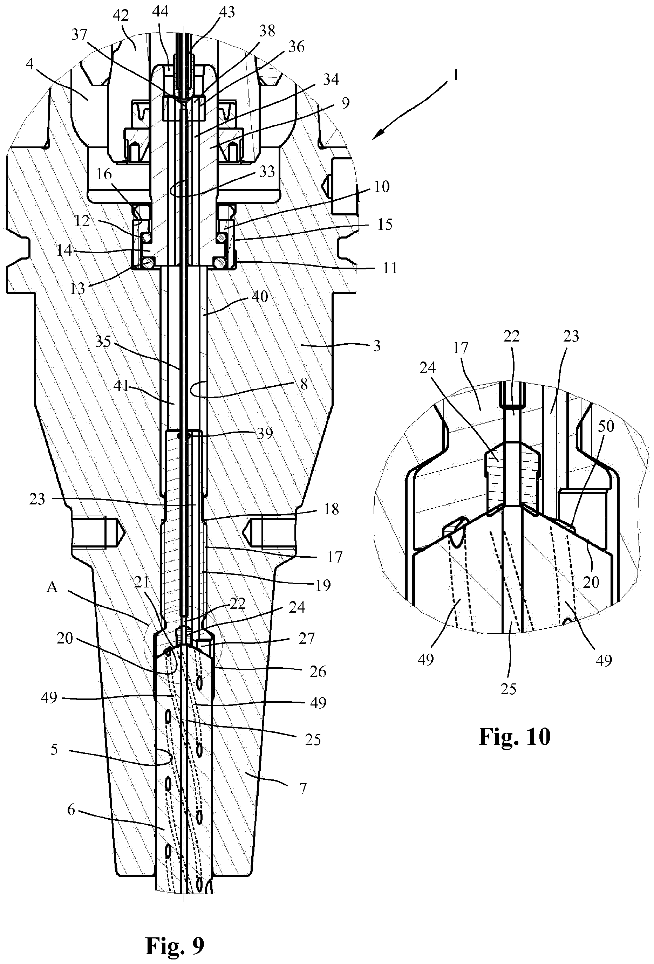

In den Figuren 9 und 10 ist ein weiteres Ausführungsbeispiel gezeigt. Bei dieser Ausführung weist das in die Aufnahmeöffnung 5 des Aufnahmekörpers 3 eingesetzte Werkzeug in seinem Werkzeugschaft 6 neben einer zentralen Kühlbohrung 25 mehrere wendelförmig um die Kühlbohrung verlaufende Kühlkanäle 49 auf. Das Anschlagteil 17 enthält an seiner dem Werkzeugschaft 6, zugewandten Anschlagfläche 20 eine Vertiefung 50, über die ein durch die Durchgangskanäle 23 eingeleitetes Fluid zu den durch den Werkzeugschaft 6 verlaufenden Kühlkanälen 49 geleitet werden kann. Ein durch das zentrale Durchgangsloch 22 des Anschlagteils eingeleitetes Fluid kann dagegen zu der zentralen Kühlbohrung 25 geführt werden. Somit können die zentrale Kühlbohrung 25 und die Kühlkanäle 49 durch getrennte Fluidzuführungen versorgt werden. Bei dieser Ausführung ist die in der Durchgangsöffnung 8 angeordnete Dichthülse 40 derart ausgebildet, dass sie das Anschlagteil 17 überlappt. Dadurch kann die abgedichtete Verbindung zwischen dem Übergabeelement 9 und dem Anschlagteil 17 auch bei einer axialen Verstellung des Anschlagteils 17 gewährleistet werden.

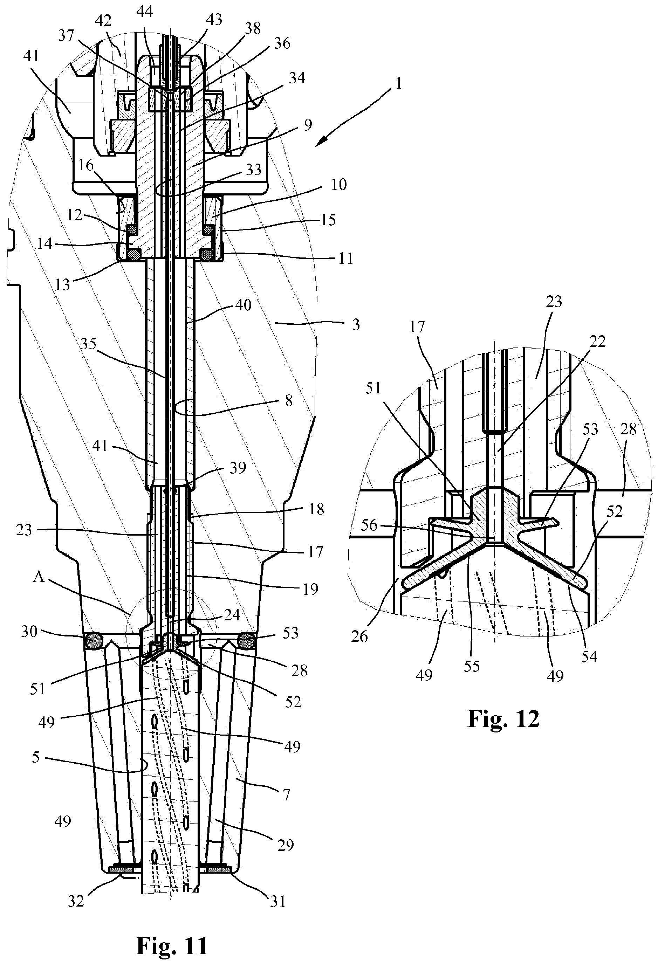

Bei der in den Figuren 11 und 12 gezeigten Ausführung ist an dem zum Werkzeugschaft 6 gewandten vorderen Ende des Anschlagteils 17 ein Verteilerelement 51 angeordnet. Wie aus Figur 12 hervorgeht, ist das Verteilerelement 51 in eine Öffnung am vorderen Ende des Anschlagteils 17 eingesetzt und weist ein vorderes Anlageteil 52 und ein elastisches hinteres Federteil 53 auf. Durch das hintere Federteil 53 ist das Verteilerelement 51 axial federnd ausgeführt.

Wie in Figur 12 gezeigt, enthält das Verteilerelement 51 an einer hier konischen vorderen Anlagefläche 54 des Anlageteils 52 eine Vertiefung 55, in die eine durch das Verteilerelement 51 verlaufende zentrale Durchgangsöffnung 56 mündet. Die Vertiefung 55 ist derart ausgebildet, dass sie die Öffnungen durch das Werkzeug verlaufender Kühlbohrungen 49 nach außen abgedichtet überdeckt. Bei dieser Ausführung kann ein über das zentrale Durchgangsloch 22 im Anschlagteil 17 eingeleitetes Fluid über das Verteilerelement 51 zu den durch den Werkzeugschaft 6 des Werkzeugs verlaufenden Kühlbohrungen 49 geleitet werden. Ein über die Durchgangkanäle 23 eingeleitetes Fluid kann über die Querbohrungen 28 und Längsbohrungen 29 zu dem vorderen Ende des Aufnahmekörpers 3 geleitet werden.

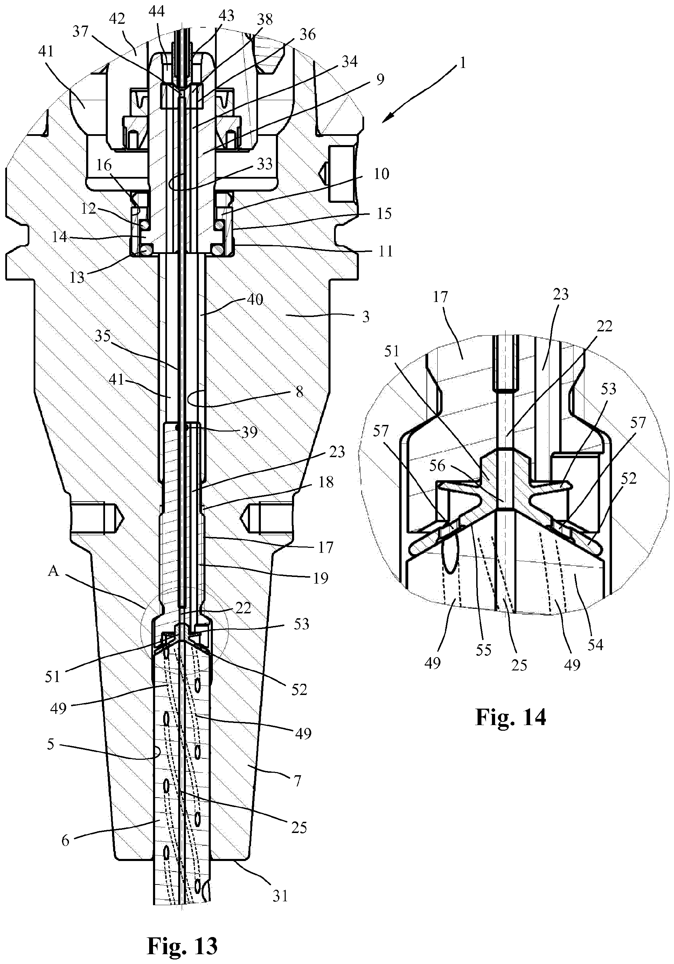

In den Figuren 13 und 14 ist ein weiteres Ausführungsbeispiel mit einem am vordem Ende des Anschlagteils 17 angeordneten Verteilerelement 51 gezeigt. Das Verteilerelement 51 weist auch hier ein vorderes Anlageteil 52 und ein elastisches hinteres Federteil 53 auf. Durch das Verteilerelement 51 verläuft eine zentrale Durchgangsöffnung 56, über die ein Fluid von dem zentralen Durchgangsloch 22 im Anschlagteil 17 in eine zentrale Kühlbohrung 25 im Werkzeugschaft 6 des Werkzeugs geleitet werden kann. In dem vorderen Anlageteil 52 des Verteilerelements 51 sind mit den Durchgangskanälen 23 des Anschlagteils 17 in Verbindung stehende Durchgänge 57 angeordnet. Über die Durchgänge 57 kann ein durch die Durchgangskanäle 23 eingeleitetes Fluid zu den durch den Werkzeugschaft 6 des Werkzeugs verlaufenden Kühlbohrungen 49 geleitet werden.

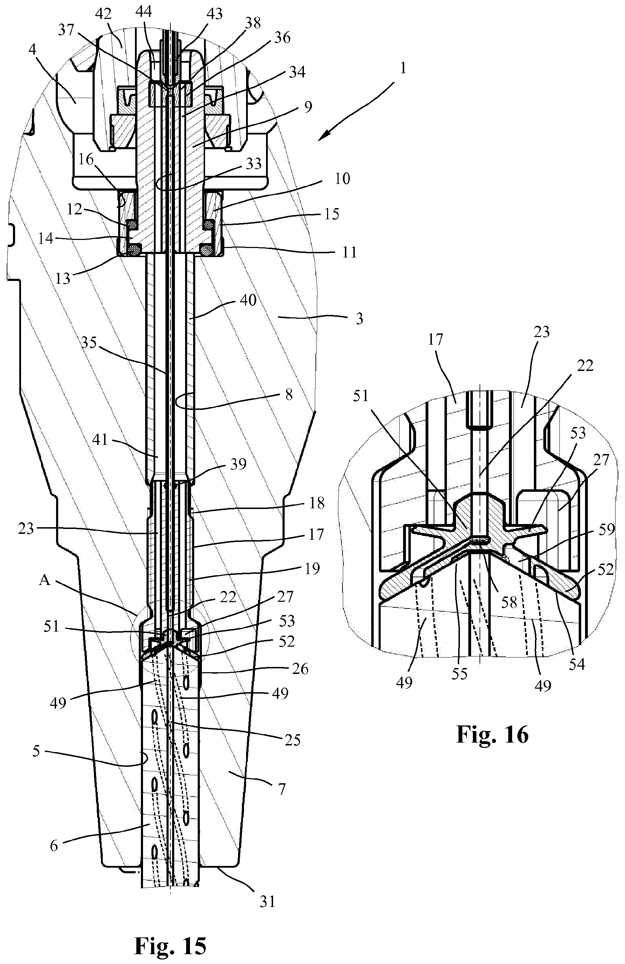

Bei dem in den Figuren 15 und 16 gezeigten weiteren Ausführungsbeispiel ist das Verteilerelement 51 derart ausgebildet, dass ein durch das zentrale Durchgangsloch 22 des Anschlagteils 17 eingeleitetes Fluid radial nach außen zu den um die zentrale Kühlbohrung 25 im Werkzeugschaft 6 verlaufenden Kühlbohrungen 49 und ein durch die Durchgangskanäle 23 im Anschlagteil 17 geleitetes Fluid radial nach innen zu der zentralen Kühlbohrung 25 geleitet wird. Für diese über Kreuz geführte Verteilung sind in dem Verteilerelement 51 gemäß Figur 16 ein von innen nach außen geführter erster Durchtrittskanal 58 und ein von außen nach innen geführter zweiter Durchtrittskanal 59 vorgesehen.

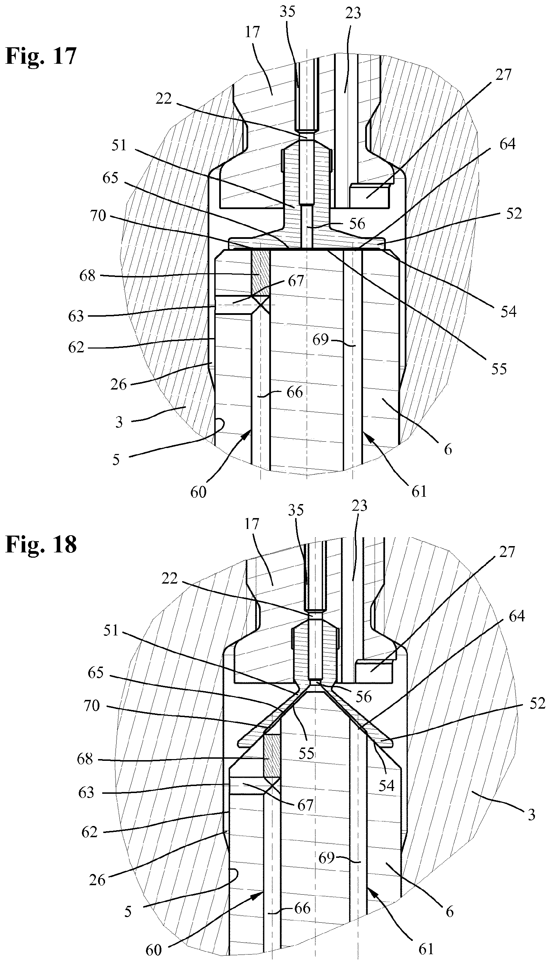

In den Figuren 17 und 18 ist ein weiteres Ausführungsbeispiel mit einem am vorderen Ende des Anschlagteils 17 angeordneten Verteilerelement 51 gezeigt. Über das hier gezeigte Verteilerelement 51 können die über das zentrale Durchgangsloch 22 und einen Durchgangskanal 23 im Anschlagteil 17 zugeführten Fluide auf mehrere Fluidkanäle 60 und 61 in einem Werkzeugschaft 6 verteilt werden. Die im Aufnahmekörper 3 angeordnete Aufnahmeöffnung 5 ist im Bereich des Schaftendes des in der Aufnahmeöffnung 5 angeordneten Werkzeugschafts 6 radial erweitert, so dass sich zwischen dem inneren Ende des Werkzeugschafts 6 und der Aufnahmeöffnung 5 ein Verteilerraum 26 für das über den Durchgangskanal 23 zugeführte Fluid ergibt.

Bei den in Figur 17 und 18 gezeigten Ausführungen verläuft durch den Werkzeugschaft 6 ein erster Fluidkanal 60, der eine an der zylindrischen Mantelfläche 62 des Werkzeugschafts 6 im Bereich des Verteilerraums 26 angeordnete Einlassöffnung 63 enthält. Durch den Werkzeugschaft 6 verläuft auch ein zweiter Fluidkanal 61, der eine Einlassöffnung 64 an einer hinteren Stirnfläche 65 des Werkzeugschafts 6 aufweist. Bei den gezeigten Ausführungen wird der erste Fluidkanal 60 durch eine in Längsrichtung des Werkzeugschafts 6 durch diesen vollständig durchlaufende Längsbohrung 66 und eine dazu rechtwinklig verlaufende Querbohrung 67 gebildet, wobei der oberhalb der Querbohrung 67 liegende Teil der Längsbohrung 66 durch einen Stopfen 68 verschlossen ist. Die Längsbohrung 66 kann aber auch nur bis zur Querbohrung 67 reichen, so dass kein Stopfen 68 benötigt wird. Der zweite Fluidkanal 61 wird durch eine in Längsrichtung des Werkzeugschafts 6 durch diesen vollständig durchlaufende Längsbohrung 69 mit der Einlassöffnung 64 an der hinteren Stirnfläche 65 gebildet. Bei der Ausführung von Figur 17 weist der Werkzeugschaft 6 eine gerade hintere Stirnfläche 65 auf, wohingegen der Werkzeugschaft 6 bei der Ausführung von Figur 18 eine konische hintere Stirnfläche 65 enthält.

Wie bei den Ausführungen der Figuren 12, 14 und 16 weist das Verteilerelement 51 ein vorderes Anlageteil 52 zur Anlage an der hinteren Stirnfläche 65 des Werkzeugschafts 6 auf. Das Anlageteil 52 ist so ausgebildet, dass es die hintere Stirnfläche 65 des Werkzeugschafts 6 mit der Einlassöffnung 64 der Längsbohrung 69 und der durch den Stopfen 68 verschlossenen Öffnung 70 der Längsbohrung 66 überdeckt. Bei der in Figur 17 gezeigten Ausführung ist das Anlageteil 52 zur Überdeckung der geraden hinteren Stirnfläche 65 eines Werkzeugschafts 6 und bei der in Figur 18 dargestellten Ausführung zur Überdeckung der konischen hinteren Stirnfläche 65 eines Werkzeugschafts 6 ausgeführt.

Bei beiden Ausführungen gemäß der Figuren 17 und 18 ist in einer vorderen Anlagefläche 54 des Anlageteils 52 eine Vertiefung 55 vorgesehen, in die eine durch das Verteilerelement 51 verlaufende zentrale Durchgangsöffnung 56 mündet. Die Vertiefung 55 ist derart ausgebildet, dass sie über der Einlassöffnung 64 und der durch den Stopfen 68 verschlossenen Öffnung 70 angeordnet ist. Durch die zentrale Durchgangsöffnung 56 kann ein über das zentrale Durchgangsloch 22 eingeleitetes Fluid über die Vertiefung 55 zu der Einlassöffnung 64 des Fluidkanals 61 geleitet werden. Ein über den Durchgangskanal 23 eingeleitetes Fluid kann über den Verteilerraum 26 und die seitliche Einlassöffnung 63 zu dem Fluidkanal 60 geleitet werden.

Auch bei den Ausführungen der Figuren 17 und 18 ist eine Fluidführung über Kreuz möglich, wie dies bei der Ausführung von Figur 16 beschrieben ist.

In einer weiteren Variante wäre es möglich, das Verteilerelement 52 so zu gestalten, dass es nur einen Teil der stirnseitig mündenden Bohrungen überdeckt. Das eine Fluid könnte dann durch die überdeckenden und das andere Fluid durch die offenen Bohrungen strömen.

Die in den Figuren 17 und 18 gezeigte Ausführung ist besonders vorteilhaft bei Bohrwerkzeugen, da diese in dem Werkstück stecken und so über die Kanäle 60 und 61 verschiedene Fluide (z.B. CO₂ und Ölnebel) durch das Werkzeug hindurch an die Schneiden gebracht werden können.

Es versteht sich, dass die Kanäle 25, 49, 60 und 61 aus allen Ausführungsbeispielen im weiteren Verlauf zentral am Schneidenende des Werkzeugs, an einer bestimmten Werkzeugschneide, oder aber auch sich verzweigend an mehreren Schneiden münden können.

## Patentansprüche

1. Werkzeugaufnahme (1) mit einem Aufnahmekörper (3), der eine Aufnahmeöffnung (5) für einen Werkzeugschaft (6) eines Werkzeugs und eine durch den Aufnahmeköper (3) verlaufende erste Fluidzuführung (22, 33, 35) für eine Fluidzufuhr zu dem Werkzeug enthält, **dadurch gekennzeichnet, dass** durch den Aufnahmekörper (3) eine mit der ersten Fluidzuführung (22, 33, 35) nicht in Verbindung stehende zweite Fluidzuführung (23, 34, 41) für eine von der ersten Fluidzuführung (22, 33, 35) getrennte Fluidzufuhr zum Werkzeug verläuft.

2. Werkzeugaufnahme nach Anspruch 1, **dadurch gekennzeichnet, dass** die erste Fluidzuführung (22, 33, 35) durch ein Durchgangsloch (22) in einem im Aufnahmekörper (3) angeordneten Anschlagteil (17), ein weiteres Durchgangsloch (33) in einem im Aufnahmekörper (3) angeordneten Übergabeelement (9) und ein im Aufnahmekörper (3) angeordnetes Verbindungsrohr (35) zur Verbindung der beiden Durchgangslöcher (22, 33) gebildet wird.

3. Werkzeugaufnahme nach Anspruch 2, **dadurch gekennzeichnet, dass** die zweite Fluidzuführung (23, 34, 40) durch mindestens einen vom Durchgangsloch (22) getrennten Durchgangskanal (23) im Anschlagteil (17), mindestens einen vom weiteren Durchgangsloch (33) getrennten weiteren Durchgangskanal (34) im Übergabeelement (9) und einem im Aufnahmekörper (3) angeordneten Verbindungskanal (41) zur Verbindung der Durchgangskanäle (23, 34) gebildet wird.

4. Werkzeugaufnahme nach Anspruch 2 oder 3, **dadurch gekennzeichnet, dass** das Verbindungsrohr (35) mit seinen Enden radial abgedichtet in dem Durchgangsloch (22) des Anschlagteils (17) und in dem weiteren Durchgangsloch (33) des Übergabeelements (9) angeordnet ist.

5. Werkzeugaufnahme nach Anspruch 3 oder 4, **dadurch gekennzeichnet, dass** das Übergabeelement (9) mit dem Anschlagteil (17) durch eine innerhalb einer Durchgangsbohrung (8) des Aufnahmekörpers (3) angeordnete Dichthülse (40) verbunden ist.

6. Werkzeugaufnahme nach Anspruch 5, **dadurch gekennzeichnet, dass** die Dichthülse (40) konzentrisch um das Verbindungsrohr (35) angeordnet ist und der Verbindungskanal (41) zwischen der Innenwand der Dichthülse (40) und der Außenwand des Verbindungsrohrs (35) begrenzt wird.

7. Werkzeugaufnahme nach Anspruch 5 oder 6, **dadurch gekennzeichnet, dass** die Dichthülse (40) und das Anschlagteil (17) überlappend miteinander verbunden sind.

8. Werkzeugaufnahme nach einem der Ansprüche 1 bis 7, **dadurch gekennzeichnet, dass** die zweite Fluidzuführung (23, 34, 41) in einen zwischen dem Werkzeugschaft (6) und der Aufnahmeöffnung (5) gebildeten Verteilerraum (26) oder in Fluidkanäle (28, 29; 48) mündet, die in einem vorderen Spannbereich (7) des Aufnahmekörpers (3) angeordnet sind.

9. Werkzeugaufnahme nach Anspruch 8, **dadurch gekennzeichnet, dass** die Fluidkanäle (28, 29; 48) durch Quer- und Längsbohrungen (28, 29) im vorderen Spannbereich des Aufnahmekörpers (3) oder durch Längsschlitze (48) an der Innenseite der Aufnahmeöffnung (5) gebildet sind.

10. Werkzeugaufnahme nach einem der Ansprüche 1 bis 9, **dadurch gekennzeichnet, dass** an dem zum Werkzeugschaft (6) weisenden Ende des Anschlagteils (17) ein Dichtelement (24) zur Abdichtung gegenüber dem Werkzeugschaft (6) angeordnet ist.

11. Werkzeugaufnahme nach einem der Ansprüche 1 bis 9, **dadurch gekennzeichnet, dass** an dem zum Werkzeugschaft (6) weisenden Ende des Anschlagteils (17) ein Verteilerelement (51) zur Verteilung der über die erste Fluidzuführung (22, 33, 35) und die zweite Fluidzuführung (23, 34, 41) zugeführten Fluide angeordnet ist.

12. Werkzeugaufnahme nach Anspruch 11, **dadurch gekennzeichnet, dass** das Verteilerelement (51) ein vorderes Anlageteil (52) und ein hinteres Federteil (53) enthält.

13. Werkzeugaufnahme nach Anspruch 11 oder 12, **dadurch gekennzeichnet, dass** das Verteilerelement (51) eine zentrale Durchgangsöffnung (56) und eine Vertiefung (55) in einer vorderen Anlagefläche (54) enthält.

14. Werkzeugaufnahme nach Anspruch 11 oder 12, **dadurch gekennzeichnet, dass** das Verteilerelement (51) eine zentrale Durchgangsöffnung (56) und mit den Durchgangskanälen (23) des Anschlagteils (17) verbundene Durchgänge (57) enthält.

15. Werkzeugaufnahme nach Anspruch 11 oder 12, **dadurch gekennzeichnet, dass** das Verteilerelement (51) einen von innen nach außen geführten ersten Durchtrittskanal (58) und einen von außen nach innen geführten zweiten Durchtrittskanal (59) enthält.

16. Werkzeug mit einem Werkzeugschaft (6) zum Einsetzen in eine Werkzeugaufnahme nach einem der Ansprüche 1 bis 15, wobei in dem Werkzeugschaft (6) zumindest eine an dessen Mantelfläche (62) angeordnete Einlassöffnung (63) für mindestes einen Fluidkanal (60) vorgesehen ist und dass in dem Werkzeugschaft (6) zumindest eine an dessen hinteren Stirnfläche (65) angeordnete Einlassöffnung (64) für einen weiteren Fluidkanal (61) vorgesehen ist.

## Claims

1. Tool holder (1) having a holder body (3) which has a holder opening (5) for a tool shank (6) of a tool and a first fluid supply (22, 33, 35) extending through the holder body (3) for a fluid supply to the tool, **characterised in that** through the holder body (3) extends a second fluid supply (23, 34, 41) not connected to the first fluid supply (22, 33, 35), for a fluid supply to the tool which is separate from the first fluid supply (22, 33, 35).

2. Tool holder according to claim 1, **characterised in that** the first fluid supply (22, 33, 35) can be formed by a through-hole (22) in a stop member (17) arranged in the holder body (3), a further through-hole (33) in a transfer element (9) arranged in the holder body (3), and a connecting pipe (35) arranged in the holder body (3) for the connection of the two through-holes (22, 33).

3. Tool holder according to claim 2, **characterised in that** the second fluid supply (23, 34, 40) is formed by at least one through-channel (23) in the stop member (17), which is separate from the through-hole (22), at least one further through-channel (34) in the transfer element (9), which is separate from the further through-hole (33), and a connecting channel (41) arranged in the holder body (3) for the connection of the through-channels (23, 34).

4. Tool holder according to claim 2 or 3, **characterised in that** the connecting pipe (35) is arranged with its ends in radially sealed relationship in the through-hole (22) of the stop member (17) and in the further through-hole (33) of the transfer element (9).

5. Tool holder according to claim 3 or 4, **characterised in that** the transfer element (9) is connected to the stop member (17) by a sealing sleeve (40) which is arranged within a through-bore (8) of the holder body (3).

6. Tool holder according to claim 5, **characterised in that** the sealing sleeve (40) is arranged concentrically round the connecting pipe (35), and the connecting channel (41) is defined between the inner wall of the sealing sleeve (40) and the outer wall of the connecting pipe(35).

7. Tool holder according to claim 5 or 6, **characterised in that** the sealing sleeve (40) and the stop member (17) are connected to each other in overlapping relationship.

8. Tool holder according to one of claims 1 to 7, **characterised in that** the second fluid supply (23, 34, 41) opens into a distributor chamber (26) formed between the tool shank (6) and the holder opening (5), or into fluid channels (28, 29; 48) which are arranged in a front clamping region (7) of the holder body (3).

9. Tool holder according to claim 8, **characterised in that** the fluid channels (28, 29; 48) are formed by transverse and longitudinal bores (28, 29) in the front clamping region of the holder body (3) or by longitudinal slots (48) on the inside of the holder opening (5).

10. Tool holder according to one of claims 1 to 9, **characterised in that** at the end of the stop member (17) pointing towards the tool shank (6) is arranged a sealing element (24) for sealing off from the tool shank (6).

11. Tool holder according to one of claims 1 to 9, **characterised in that** at the end of the stop member (17) pointing towards the tool shank (6) is arranged a distributor element (51) for distributing the fluids supplied via the first fluid supply (22, 33, 35) and the secondfluid supply (23, 34, 41).

12. Tool holder according to claim 11, **characterised in that** the distributor element (51) comprises a front contact portion (52) and a rear spring portion (53).

13. Tool holder according to claim 11 or 12, **characterised in that** the distributor element (51) comprises a central through-opening (56) and a depression (55) in a front contact surface (54).

14. Tool holder according to claim 11 or 12, **characterised in that** the distributor element (51) has a central through-opening (56) and passages (57) connected to the through-channels (23) of the stop member (17).

15. Tool holder according to claim 11 or 12, **characterised in that** the distributor element (51) comprises a first through-channel (58) leading from inside to outside and a second through-channel (59) leading from outside to inside.

16. Tool having a tool shank (6) for insertion in a tool holder according to one of claims 1 to 15, wherein in the tool shank (6) is provided at least one inlet opening (63) arranged in its shell surface (62) for at least one fluid channel (60), and in that in the tool shank (6) is provided at least one inlet opening (64) arranged in its rear end face (65) for a further fluid channel (61).

## Revendications

1. Logement d'outil (1) comprenant un corps de logement (3), qui contient une ouverture de logement (5) pour un manche d'outil (6) d'un outil et une première arrivée de fluide (22, 33, 35), s'étendant à travers le corps de logement (3), pour une amenée de fluide vers l'outil, **caractérisé en ce qu'**une deuxième arrivée de fluide (23, 34, 41) non reliée à la première arrivée de fluide (22, 33, 35) pour un apport de fluide, séparé de la première arrivée de fluide (22, 33, 35), vers l'outil s'étend à travers le corps de réception (3).

2. Logement d'outil selon la revendication 1, **caractérisé en ce que** la première arrivée de fluide (22, 33, 35) est formée par un trou de passage (22) dans une partie de butée (17) disposée dans le corps de logement (3), un autre trou de passage (33) est formé dans un élément de transfert (9) disposé dans le corps de logement (3) et un tuyau de liaison (35) disposé dans le corps de logement (3) est formé afin de relier les deux trous de passage (22, 33).

3. Logement d'outil selon la revendication 2, **caractérisé en ce que** la deuxième arrivée de fluide (23, 34, 40) est formée par au moins un canal de passage (23), séparé du trou de passage (22), dans la partie de butée (17), par au moins un autre canal de passage (34), séparé de l'autre trou de passage (33), dans l'élément de transfert (9) et par un canal de liaison (41) disposé dans le corps de logement (3) servant à relier les canaux de passage (23, 34).

4. Logement d'outil selon la revendication 2 ou 3, **caractérisé en ce que** le tuyau de liaison (35) est disposé par ses extrémités de manière radialement étanchéifiée dans le trou de passage (22) de la partie de butée (17) et dans l'autre trou de passage (33) de l'élément de transfert (9).

5. Logement d'outil selon la revendication 3 ou 4, **caractérisé en ce que** l'élément de transfert (9) est relié à la partie de butée (17) par une douille d'étanchéité (40) disposée à l'intérieur d'un alésage de passage (8) du corps de réception (3).

6. Logement d'outil selon la revendication 5, **caractérisé en ce que** la douille d'étanchéité (40) est disposée de manière concentrique autour du tuyau de liaison (35), et le canal de liaison (41) est délimité entre la paroi intérieure de la douille d'étanchéité (40) et la paroi extérieure du tuyau de liaison (35).

7. Logement d'outil selon la revendication 5 ou 6, **caractérisé en ce que** la douille d'étanchéité (40) et la partie de butée (17) sont reliées l'une à l'autre de manière à se chevaucher.

8. Logement d'outil selon l'une quelconque des revendications 1 à 7, **caractérisé en ce que** la deuxième arrivée de fluide (23, 34, 41) débouche dans un espace de répartition (26) formé entre le manche d'outil (6) et l'ouverture de réception (5) ou dans des canaux de fluide (28, 29 ; 48), qui sont disposés dans une zone de serrage (7) avant du corps de logement (3).

9. Logement d'outil selon la revendication 8, **caractérisé en ce que** les canaux de fluide (28, 29 ; 48) sont formés par des alésages transversaux et longitudinaux (28, 29) dans la zone de serrage avant du corps de logement (3) ou par des entailles longitudinales (48) au niveau du côté intérieur de l'ouverture de réception (5).

10. Logement d'outil selon l'une quelconque des revendications 1 à 9, **caractérisé en ce qu'**un élément d'étanchéité (24) servant à l'étanchéification par rapport au manche d'outil (6) est disposé au niveau de l'extrémité, pointant en direction du manche d'outil (6), de la partie de butée (17).

11. Logement d'outil selon l'une quelconque des revendications 1 à 9, **caractérisé en ce qu'**un élément de répartition (51) servant à la répartition des fluides amenés par l'intermédiaire de la première arrivée de fluide (22, 33, 35) et de la deuxième arrivée de fluide (23, 34, 41) est disposé au niveau de l'extrémité, pointant en direction du manche d'outil (6), de la partie de butée (17).

12. Logement d'outil selon la revendication 11, **caractérisé en ce que** l'élément de répartition (51) contient une partie d'appui (52) avant et une partie de ressort (53) arrière.

13. Logement d'outil selon la revendication 11 ou 12, **caractérisé en ce que** l'élément de répartition (51) contient une ouverture de passage (56) centrale et un renfoncement (55) dans une surface d'appui (54) avant.

14. Logement d'outil selon la revendication 11 ou 12, **caractérisé en ce que** l'élément de répartition (51) contient une ouverture de passage (56) centrale et des passages (57) reliés aux canaux de passage (23) de la partie de butée (17).

15. Logement d'outil selon la revendication 11 ou 12, **caractérisé en ce que** l'élément de répartition (51) contient un premier canal de traversée (58) guidé de l'intérieur vers l'extérieur et un deuxième canal de traversée (59) guidé de l'extérieur vers l'intérieur.

16. Outil comprenant un manche d'outil (6) destiné à être inséré dans un logement d'outil selon l'une quelconque des revendications 1 à 15, dans lequel au moins une ouverture d'entrée (63) disposée au niveau de la face extérieure (62) du manche d'outil est prévue pour au moins un canal de fluide (60) dans le manche d'outil (6), et qu'au moins une ouverture d'entrée (64) disposée au niveau de la face frontale (65) arrière du manche d'outil est prévue pour un autre canal de fluide (61) dans le manche d'outil (6).
